# EUROPÄISCHE PATENTSCHRIFT

(11) **EP 1 966 642 B1**
(45) Veröffentlichungstag und Bekanntmachung des Hinweises auf die Patenterteilung: **28.09.2016**
(21) Anmeldenummer: 06828724.2
(22) Anmeldetag: 21.12.2006
(51) Int. Cl.: G02B 27/00, G03B 17/08, H04N 5/225

(54) **Digitale Überwachungskamera für die Benutzung im Freien**
Outdoor digital surveillance camera
Caméra de surveillance numérique pour usage extérieur

(30) Priorität: 23.12.2005 DE 202005020282 U
(43) Veröffentlichungstag der Anmeldung: 10.09.2008
(73) Patentinhaber: Mobotix AG, 67722 Winnweiler (DE)
(72) Erfinder: HINKEL, Ralf, 67724 Höringen (DE)
(74) Vertreter: Vossius & Partner Patentanwälte Rechtsanwälte mbB
(86) Internationale Anmeldenummer: PCT/DE2006/002299
(87) Internationale Veröffentlichungsnummer: WO 2007/076829

(56) Entgegenhaltungen:
- WO-A-00/47932
- WO-A-2004/047421
- US-A- 5 153 622
- US-A- 5 374 970
- US-A- 6 009 564

## Beschreibung

Die vorliegende Erfindung betrifft eine digitale Überwachungskamera für die Benutzung im Freien.

Solche optische Anordnungen umfassen in der Regel optische Elemente und Gehäuse. Benannt seien beispielsweise Kameras, an denen ein Kamerakörper fest montierte oder wechselbare Objektive aufweist.

Das typische Gehäuse weist dabei wenigstens eine Lichtdurchlassöffnung auf und umschließt die im Inneren angeordnete Komponenten wie lichtempfindliche CMOS-Arrays, etc. möglichst vollständig. Dies wird im Regelfall spätestens dann erreicht, wenn etwa auf einen Kamerakörper ein Wechselobjektiv aufgesetzt ist und somit ein Abschluss gegen das Innere erzielt wurde, das Gerät also einsatzbereit ist. Im Regelfall wird Sorge dafür getragen, dass weder Staub noch andere Festkörper wie Sporen oder Pollen in das Innere eindringen können, genauso wie verhindert werden muss, dass auch keine Feuchtigkeit in das Innere von optischen Geräten eindringt.

Sofern möglich, ist eine bevorzugte Variante des Gehäusebaus daher eine hermetische Abdichtung des Gehäuses. Hintergrund ist, dass durch die vollständige Abdichtung eine Beeinträchtigung der Optik im Strahlengang vermieden werden soll, was einleuchtenderweise durch Fernhalten aller eindringenden Stoffe geschehen kann.

Eine mögliche Beeinträchtigung ist dabei auch das Beschlagen optischer Komponenten durch Kondensation von Luftfeuchtigkeit auf denselben. Dies ist ein bekanntes Phänomen insbesondere bei optischen Teilen, die wechselnden Temperaturen ausgesetzt sind; so ist ein Beschlagen von Brillen ein im Winter häufig beobachtetes Phänomen, wenn der Brillenträger in einen beheizten, wärmeren Raum mit höherer Luftfeuchtigkeit tritt und sich diese an den Brillengläsern niederschlägt. Gleiches tritt auch bei Kameras etc. auf.

Aus dem Stand der Technik ist es bekannt, semipermeable Membranen zu verwenden, um einen Luftaustausch zwischen einem abgeschlossenen Raum einer optischen Einrichtung und der Außenwelt zu ermöglichen, Die optische Einrichtung kann beispielsweise ein Fahrzeugscheinwerfer sein, vergleiche WO 00/47932 A1, eine fotografische, gegen Regen abzudichtende Kamera, vergleiche US 5,153,622 oder US 5,374,970, eine Skibrille wie in der US 6,009,564 beschrieben, oder eine Rückfahrkamera für ein Fahrzeug, vergleiche WO 2004/047421 A2.

In der Praxis kann ein Beschlagen auftreten, wenn optische Geräte im Freien aufgestellt werden müssen oder dorthin verbracht werden und dort wechselnden Witterungsbedingungen ausgesetzt sind. Das Problem wird besonders gravierend, wenn Gehäuse aus Kunststoffen verwendet werden, da selbst bei an sich hermetischem Abschluss der Gehäuse durch Diffusion von Feuchtigkeit durch die Gehäusewände hindurch ein Beschlagen optischer Elemente wie innenliegender Oberflächen von Linsen und/oder von lichtempfindlichen Feldern auftreten kann.

Prinzipiell ist es möglich, diesem Beschlagen durch Beheizen des Gehäuses zu begegnen. Problematisch hieran ist, dass dafür gegebenenfalls erhebliche Heizleistungen aufgewendet werden müssen.

Es ist wünschenswert, eine einfache Anordnung vorzusehen, mit der ein Beschlagen von optischen Elementen oder dergleichen im Inneren zumindest weniger wahrscheinlich und/oder seltener und/oder kürzer ist.

Die Aufgabe der vorliegenden Erfindung besteht darin, Neues für die gewerbliche Anwendung bereitzustellen. Die Lösung dieser Aufgabe wird in unabhängiger Form beansprucht.

Ein erster Grundgedanke der Erfindung ist somit darin zu sehen, dass keine hermetische Abdichtung des Gehäuses mehr vorgesehen wird, sondern statt dessen gezielt ein Gasaustausch mit der Umgebung gefördert wird, um feuchte Luft weg von einem Lichtdurchlassfenster und/oder einer optischen Fläche im optischen Weg zu lassen. Dies führt dazu, dass allenfalls kurz ein Beschlagen der optischen Elemente im Strahlengang auftreten kann, zum Beispiel wenn auf Grund von durch ein Gehäuse eindringender Feuchtigkeit und danach auftretenden Temperaturänderungen Elemente beschlagen und zwar weil durch den Gasaustausch, den der Gaskommunikationsweg zulässt, Dampf bzw. feuchte Luft durch die permeable Membran nach außen gelangt und so die optischen Elemente nicht mehr beeinträchtigt. Es sei im übrigen darauf hingewiesen, dass, wenn in der vorliegenden Anmeldung von Licht die Rede ist, Bezug genommen wird nicht nur auf sichtbares Licht, sondern auch auf Strahlung im Infraroten sowie, je nach Anwendung und Auslegung der optischen Anordnung, auch oder ausschließlich im ultravioletten Bereich. Mit anderen Worten umfasst der Begriff Licht hier zumindest einen breiten Teil des elektromagnetischen Spektrums, sei es ultraviolettes, infrarotes oder sichtbares Licht.

Weiter ist einsichtig, dass als dampfpermeable Membran eine Membran angesehen wird, die ohne weiteres wenigstens in eine Richtung den Durchtritt von Dampf respektive von feuchter, gegebenenfalls auch feuchtegesättigter Luft zulässt. Zugleich wird durch die membranartige Auslegung ein Eindringen zumindest grober Fremdkörper in das Gehäuseinnere hinein vermieden. In allgemeinster Form kann somit die Membran als Sperre für wenigstens grobe Feststoffe aufgefasst werden; in bevorzugten Varianten ist die Membran, wie sich noch ergeben wird, anders aufgebaut.

Die optische Anordnung kann und wird in einer Ausführungsform als Digitalkamera gebildet sein wie im Freien zu montierende Überwachungskamera.

Es sei darauf hingewiesen, dass in derartigen Anwendungsfällen die Membran klein gebildet werden kann und insbesondere ihrerseits im Gehäuseinneren angeordnet sein kann, wobei die Membran dann durch Durchtrittsöffnungen im Gehäuse, etwa in Form einer Perforierung, Lochung oder dergleichen mit der Außenseite kommunizieren kann. Durch hinreichend dicke Auslegung des Gehäuses in der Nähe der Membran und das Vorsehen nicht zu großer Durchtrittsöffnungen, von denen gegebenenfalls eine Vielzahl vor der Membran angeordnet werden kann, ist die Membran auch mechanisch gut geschützt, was es ohne Weiteres möglich macht, die Membran selbst ausschließlich im Hinblick auf Dampfpermeabilitätseigenschaften usw. auszulegen, ohne auf hohe Steifigkeit usw. zu achten.

Das Gehäuse wird in den typischen Anwendungen staubschützend sein und/oder den Gehäuseinnenraum möglichst vollständig umschließen, wobei hier das vollständige Umschließen einsichtigerweise so aufzufassen ist, dass ein Gasaustausch mit der Außenumgebung durch die dampfpermeable Membran, bevorzugt zumindest weitestgehend ausschließlich durch die dampfpermeable Membran, nicht verhindert werden soll.

In einer besonders bevorzugten Variante ist das Gehäuse überdies wetterfest ausgelegt, das heißt dergestalt, dass es starken Temperaturschwankungen, Sonneneinstrahlung und Niederschlägen zumindest weitgehend widerstehen kann, was gegebenenfalls durch Gehäuseaufsätze wie Blenden und Dächer, die nicht mit dem Gehäuseinnenraum verbunden sein müssen oder das eigentliche Gehäuse weiter schützen können, erreichbar ist. Vorteilhaft ist dabei, dass durch die dampfpermeable Membran typischerweise auch bei starken Temperaturschwankungen kein Über- und Unterdruck im Gehäuse auftreten wird, da dieses nicht mehr vollständig hermetisch gegen die Umgebung abgegrenzt ist. Dies verringert das Eindringen von Feuchte bereits

Im Gehäuse der optischen Anordnung sind Wärmequellen vorgesehen, was bei Digital- und/oder Videokameras bereits durch im Gehäuse angeordnete elektrische Verbraucher wie Prozessoren, Schnittstellenelemente zur Ankopplung einer Kamera an ein Netzwerk, sei es in drahtloser oder drahtgebundenet Form, usw. der Fall ist. Derartige Wärmequellen erzeugen zwar nur ein geringes Maß an Wärme, durch das Umschließen des Gehäuses wird aber dennoch eine zur Dampfentlüftung über die dampfpermeable Membran ausreichende Wärmemenge bei typischen Anwendungen produziert. Sollte es erforderlich sein, dass die optische Anordnung unter extremen Bedingungen eingesetzt wird, können allerdings zusätzlich ein oder mehrere Heizelemente vorgesehen werden, die zu einer zusätzlichen Aufheizung des Gehäuseinneren beitragen können. Derartige Heizelemente sind bevorzugt kurzfristig und/oder netzgesteuert und/oder umgebungsgesteuert zuschaltbar. Selbst wenn derartige Heizelemente vorgesehen werden, ist aber im Vergleich zu einer Anordnung, bei der eine Beschlagsfreiheit der im Strahlengang Vorgesehenen optischen Elemente erreicht werden soll, ohne dass eine dampfpermeable Membran in erfindungsgemäßer Weise vorgesehen wird, die noch erforderliche Heizleistung gering.

Das Lichtdurchlassfenster braucht insbesondere nicht einem fokussierenden oder defokussierenden Element gleich zu sein, sondern es kann sich um einen Objektivvorsatz oder ein auf ein Gehäuse schraubbares Objektivschutzelement handeln. Dieses ist transparent und kann im übrigen gegebenenfalls in üblicher Weise beschichtet werden.

In einer bevorzugten Variante ist die dampfpermeable Membran so angeordnet, dass lediglich vom Gehäuseinneren nach außen Dampf entweichen kann, was für die vorliegende Erfiudung heißen möge, dass sich durch Gasaustausch mit der Umgebung die Feuchtigkeit, insbesondere die Luftfeuchtigkeit im Inneren verringert. Die dampfpermeable Membran wird aber typisch so ausgelegt, dass außen auftretendes Wasser, insbesondere in Form von Niederschlägen auftretendes Wasser, zumindest kurzfristig abgewiesen wird und/oder abperlt. Es kann sich bei der dampfpermeablen Membran insbesondere um ein textilartiges Gewebe handeln. Einsetzbar sind etwa GORETEX-Membranen, wie sie insbesondere schon als Druckausgleichselemente vorgesehen werden.

Der Gaskommunikationsweg wird bei vollflächig umfassten optischen Elementen durch Bohrungen und/oder Durchtrittslöcher erfolgen. Ist ein Objektiv einer Kamera mit einer Objektivschutzhaube geschützt, und soll im Zwischenraum zwischen Objektiv und Objektivschutzhaube ein Beschlagen verhindert werden, so reichen einige wenige, kleine Durchtrittsöffnungen zwischen dem Gehäuseinneren und der Haube, die das Objektiv umgibt, um den für eine Entfeuchtung erforderlichen Gasaustausch bewirken zu können. In einer bevorzugten Variante sind eine Vielzahl von Bohrungen und/oder Durchtrittslöcher vorgesehen, um eine gleichmäßige Entfeuchtung auch beabstandeter Bereiche eines Lichtdurchtrittsfensters und/oder anderer feuchtigkeitsempfindlicher optischer Elemente im Strahlengang zu bewirken.

Die Erfindung wird im Folgenden nur beispielsweise anhand der Zeichnung beschrieben. In dieser ist gezeigt durch:

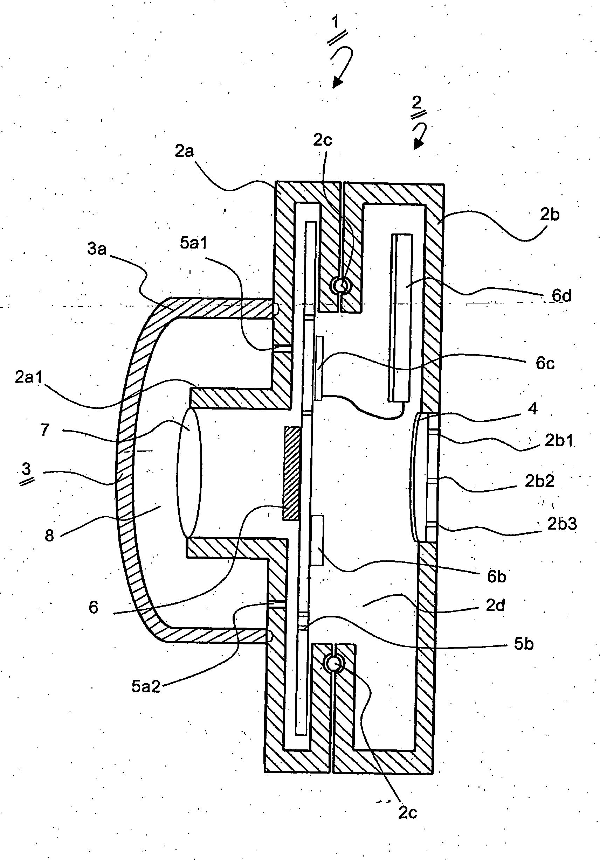

- Fig. 1: eine optische Anordnung gemäß der vorliegenden Erfindung.

Nach Figur 1 umfasst eine allgemein mit 1 bezeichnete optische Anordnung ein Gehäuse 2 mit einem Lichtdurchlassfenster 3 daran, wobei das Gehäuse 2 weiter eine dampfpermeable Membran 4 aufweist und ein Gaskommunikationsweg 5 vom Lichtdurchlassfenster 3 zur dampfpermeablen Membran 4 vorgesehen ist.

Die optische Anordnung 1 ist im dargestellten Ausführungsbeispiel eine Videokamera mit Netzanschluss (nicht dargestellt), die zur Anbringung im Freien ausgebildet ist und dort Witterungseinflüssen wie schwankenden Temperaturen, Wind, Niederschläge und Sonneneinstrahlung auf längere Dauer zu widerstehen hat.

Das Gehäuse 2 der Videokamera 1 ist im dargestellten Ausführungsbeispiel zweischalig aus einem Vorderteil 2a und einem Rückteil 2b gebildet, wobei durch eine zwischen diesen Schalen vorgesehene umlaufende Dichtung 2c das Gehäuseinnere mit Ausnahme der Löcher 5a1, 5a2 zur Objektivabdeckung mit dem Lichtdurchlassfenster 3 staubdicht ist. Der zwischen den Gehäuseschalen 2a, 2b gezeichnete Spalt ist lediglich aus Gründen der besseren graphischen Darstellbarkeit vorgesehen und es versteht sich, dass in der praktischen Ausführung beide Gehäuseschalen eng zusammengepresst sein werden, was durch geeignete Verschraubung, Verklebung oder dergleichen erfolgen kann. Die Gehäuseschalen sind, wie bevorzugt und möglich, im dargestellten Ausführungsbeispiel aus Kunststoff gespritzt.

Im Gehäuseinneren ist eine Platine vorgesehen, die einerseits ein lichtempfindliches Element 6 trägt, auf welches Licht durch eine Linse 7 und das Lichtdurchlassfenster 3 zur Beobachtung eines bestimmten Bereiches fallen kann. Das lichtempfindliche Element 6 ist seinerseits unmittelbar auf einer Platine angeordnet, die eine Mehrzahl von elektrischen Verbrauchern wie Widerständen 6b, Bildverarbeitungsprozessoren 6c usw. umfasst, die Energie von einem Energiespeicher 6d empfangen, der als wiederaufladbarer Akkumulator 6d dargestellt ist, welcher zwischen den Gehäuseschalen 2a, 2b umschlossenen Gehäuseinneren 2d angeordnet ist. Die elektrische Leistung, die dem Akkumulator 6d zu entnehmen ist, ist gering und legt bei einigen wenigen Watt oder einem Bruchteil davon. Die Linse 7 ist an einer an der vorderen Gehäuseschale 2a gebildeten Tubusanformung 2a1 gehalten und mit dieser gasdicht verklebt; die Verwendung von Wechselobjektiven an dieser Stelle, die insbesondere durch Einbringen von Gewinden in der oberen Gehäuseschale 2a montierbar sein können, sei jedoch der Vollständigkeit halber als zusätzliche Möglichkeit explizit offenbart.

Auf der vorderen Gehäuseschale 2a ist das Lichtdurchlassfenster 3 vorgesehen, und zwar an einer insgesamt aus Transparentmaterial bestehenden Haube 3a, die vor der Linse 7 angeordnet wird. Die Haube 3a geht in gasdichter Weise auf die obere Gehäuseschale 2a über, wozu sie vollumfänglich mit dieser gasdicht verklebt sein kann. Im Bereich zwischen der Tubusanformung 2a1, in welcher die Linse 7 gehalten ist, und der umlaufenden Wandung der Objektivschutzhaube 3a sind die zum Gasweg 5 gehörenden Gaskommunikationsöffnungen 5a1, 5a2, sowie gegebenenfalls bevorzugt weitere, nicht in der Schnittebene liegende Gaskommunikationsöffnungen vorgesehen.

Die dampfpermeable Membran 4 ist im Ausführungsbeispiel auf der Rückseite des Gehäuses 2 und somit der unteren beziehungsweise hinteren Gehäuseschale angeordnet; jede andere Gehäusestelle, zu der hinreichend Gaskommunikation möglich ist, ist aber gleichfalls geeignet. Sie ist im dargestellten Ausführungsbeispiel aus GORETEX gebildet, weil dieses ein leicht verarbeitbares textiles Gewebe darstellt, das rottfest ist, bei außen anstehender Nässe kein Wasser ins Gehäuseinnere durchlässt, gleichwohl aber Dampf aus dem Inneren 2d des Gehäuses 2 nach Außen durchtreten lässt und im Übrigen gut mit dem Gehäuseboden beziehungsweise mit der Gehäuseunterschale 2b an den Rändern der Membran 4 verbindbar ist. Die Gehäuseschale 2b weist nach Außen hin eine Vielzahl kleinerer Durchtrittslöcher 2b1, 2b2, 2b3 auf, durch welche Luft treten kann.

Die Platine, die das lichtempfindliche Element 6 sowie die weiteren elektrischen und elektronischen Komponenten der Videokamera 1 trägt, weist eine Anzahl von Durchtrittslöchern auf, die eine Gaskommunikation zwischen der Membran 4 und der Linse 7 erlauben und auch ein Durchtreten von Gas aus den Löchern 5a1, 5a2 zur Membran 4 zulassen. Überdies ist die Platine 6 nicht so an der oberen Gehäuseschale 2a befestigt, dass ein Gasdurchtritt von der Oberseite der Platine zur Unterseite hin vollständig unterbunden wäre.

Die Videokamera der vorliegenden Erfindung wird benutzt wie folgt:
Zunächst wird die Videokamera im Freien aufgestellt und/oder an einer Halterung oder dergleichen befestigt. Wenn dann im Laufe der Benutzung Feuchtigkeit auf Grund von Diffusionsprozessen durch den Kunststoff der Gehäuseschalen 2a, 2b in das Innere 2d des Gehäuses gelangt, kann es zunächst bei starken Temperaturschwankungen, die durch abruptes Aufheizen etwa nach Abschattung oder morgendlicher einsetzender Sonneneinstrahlung bedingt sein können, zu einer erhöhten Luftfeuchtigkeit im Gehäuseinneren respektive im Raum zwischen dem Lichtdurchlassfenster 3 und der optischen Linse 7 kommen. Prinzipiell besteht somit die Gefahr, dass sich auf dem Lichtdurchlassfenster 3 oder einer der beiden Oberflächen der hier dargestellten einzelnen Linse 7 Feuchtigkeit niederschlägt, was zu einer erheblichen Bildbeeinträchtigung führen könnte. Durch den permanenten Gasaustausch zwischen dem von der Haube 3a und der oberen Gehäuseschale umschlossenen Raum 8 und der Membran 4 über die Gaskommunikationswege 5a1, 5a2 und 5b wird aber zunächst erreicht, dass sich schon durch natürliche Diffusionsprozesse, gegebenenfalls unterstützt durch die geringe Konvektion auf Grund der wärmeerzeugenden Elemente im Gehäuse 6 keine Luftfeuchte-Gradienten im Gehäuse ausbilden. Die Dampfpermeabilität der Membran 4 sorgt überdies dafür, dass in solchen Situationen auch ein Luftfeuchtigkeitsaustausch mit der Umgebung stattfindet, also die im Vergleich zur Außenumgebung überhöhte Luftfeuchte vermittels von Diffusionsprozessen durch die Membran 4 hindurch verringert wird. Dies hat zur Folge, dass, sollte es anfänglich zu einem leichten Beschlagen des Lichtdurchlassfensters 3 und/oder einer oder mehrerer der Oberflächen der optischen Linse 7 kommen, sich dieses überhaupt nur gering ausprägen kann und überdies schnell reduziert wird.

Sollte hingegen die Kamera Regen ausgesetzt werden, und dieser auf Grund ungünstigster Bedingungen durch die Löcher 2b1, 2b2, 2b3 an die Membran 4 vordringen, was typischerweise ohnehin durch geeignete konstruktive Schutzmaßnahmen des Gehäuses vermieden wird, so wird die Feuchtigkeit nicht bis in das Gehäuseinnere vordringen können und damit den Betrieb der Kamera nicht beeinträchtigen.

Durch die dampfpermeable Membran 4 und das Vorsehen einer geeigneten Gaskommunikation mit beschlagungsgefährdeten Bereichen im optischen Strahlengang eines mit erfindungsgemäßern Gehäuse versehenen optischen Gerätes wird somit ohne aufwendigen hermetischen Vollschutz eine gegenüber diesem noch verbesserte Betriebsmöglichkeit beziehungsweise erhöhte Bildqualität erreicht.

Während vorstehend angegeben wurde, dass im Inneren des Gehäuses ein Akkumulator 6d vorgesehen ist, muss dies nicht zwingend der Fall sein. Es versteht sich, dass stattdessen gegebenenfalls auch externe Leistungszufuhr möglich ist, wie prinzipiell auch eine Schnittstellenbeschaltung in üblicher Weise vorgesehen werden kann, ohne von den Prinzipien der vorliegenden Erfindung abzuweichen. Weiter versteht sich, dass keine getrennte Haube vorzusehen ist, sondern gegebenenfalls eine Belüftung des Tubus über geeignete Gaskommunikationswege erfolgen kann; dass als Durchtrittsfenster, die beschlagungsgefährdet sind und die in geeigneter Weise über Gaskommunikationswege mit der dampfpermeablen Membran kommunizieren können, nicht nur plane Elemente verstanden werden, sei erwähnt.

## Patentansprüche

1. Digitale Überwachungskamera (1) für die Benutzung im Freien,
mit
Wärmequelle
und
einem Gehäuse(2),
das
eine transparente Objektivschutzhaube (3a) darauf und
eine dampfpermeable Membran (4)
sowie
einen Gaskommunikationsweg von der Objektivschutzhaube zur dampfpermeablen Membran
aufweist,
wobei
das Gehäuse (2) mit einer unteren Schale und einer oberen Schale aufgebaut ist,
die dampfpermeable Membran (4) auf der unteren Gehäuseschale angeordnet ist,
und
die transparente Objektivschutzhaube gasdicht zur oberen Gehäuseschale übergeht, so dass sie damit einen umschlossenen Raum bildet,
wobei
von der Objektivschutzhaube
zum Gehäuseinneren
Löcher (5a1, 5a2) als Gaskommunikationsöffnungen
und
im Gehäuseinneren
eine Platine
vorgesehen sind,
wobei die Platine
elektrische Verbraucher, insbesondere
einen Prozessor
und/oder
Schnittstellen zur Netzwerkanbindung,
als Wärmequellen im Gehäuseinneren aufweist
sowie
eine Anzahl von Durchtrittslöchern (5b) aufweist, die wiederum ein Durchtreten von Gas aus den Löchern (5a1, 5a2) zur Membran (4) zulassen,
so dass
der Gasweg zwischen dem Gehäuseinneren und der Objektivschutzhaube
zu der dampfpermeablen Membran (4) durch die Löcher (5a1, 5a2) und die Durchtrittslöcher (5b)
führt,
so dass der Gaskommunikationsweg
zwischen ansonsten einen allenfalls geringen Gasaustausch erlaubenden Gehäuseteilen
durch Bohrungen und/oder Durchtrittslöcher gebildet ist.

2. Digitale Überwachungskamera (1) nach Anspruch 1, **dadurch gekennzeichnet, dass** das Gehäuse (2) aus einem Kunststoff gespritzt ist, insbesondere einem Dampf von außen nach innen durchlassenden Kunststoff.

3. Digitale Überwachungskamera (1) nach einem der vorhergehenden Ansprüche, **dadurch gekennzeichnet, dass** das Gehäuse (2) staubschützend gebildet ist und/oder wetterfest ausgelegt ist.

4. Digitale Überwachungskamera (1) nach einem der vorhergehenden Ansprüche, **dadurch gekennzeichnet, dass** das Gehäuse (2) wärmestrahlungsabsorbierend ausgelegt ist.

5. Digitale Überwachungskamera (1) nach einem der vorhergehenden Ansprüche, **dadurch gekennzeichnet, dass** die dampfpermeable Membran für Dampf semipermeabel und/oder so angeordnet ist, dass Dampf aus dem Gehäuseinneren nach außen entweichen kann.

6. Digitale Überwachungskamera (1) nach einem der vorhergehenden Ansprüche, **dadurch gekennzeichnet, dass** die dampfpermeable Membran (4) zumindest für außen auftretendes Wasser zumindest kurzfristig abweisend ist.

7. Digitale Überwachungskamera (1) nach einem der vorhergehenden Ansprüche, **dadurch gekennzeichnet, dass** die dampfpermeable Membran (4) mit einem textilartigen Gewebe gebildet ist.

## Claims

1. Digital surveillance camera (1) for outdoor use, comprising heat sources and a housing (2) which has a transparent lens protection hood (3a) on the said housing and has a vapour-permeable diaphragm (4) and also has a gas communication path from the lens protection hood to the vapour-permeable diaphragm, wherein the housing (2) is constructed with a lower shell and an upper shell, the vapour-permeable diaphragm (4) is arranged on the lower housing shell, and the transparent lens protection hood merges in a gas-tight manner with the upper housing shell, so that the said transparent lens protection hood forms an enclosed space with the said upper housing shell, wherein holes (5a1, 5a2) are provided from the lens protection hood to the housing interior as gas communication openings and a printed circuit board is provided in the housing interior, wherein the printed circuit board has electrical loads, in particular a processor and/or interfaces for network connection, as heat sources in the housing interior, and also has a number of passage holes (5b) which, for their part, permit gas to pass from the holes (5a1, 5a2) to the diaphragm (4), so that the gas path between the housing interior and the lens protection hood leads to the vapour-permeable diaphragm (4) through the holes (5a1, 5a2) and the passage holes (5b), so that the gas communication path between housing parts which otherwise allow at best a low level of gas exchange is formed by bores and/or passage holes.

2. Digital surveillance camera (1) according to the preceding claim, **characterized in that** the housing (2) is injection-moulded from a plastic, in particular a plastic which allows vapour to pass from the outside to the inside.

3. Digital surveillance camera (1) according to either of the preceding claims, **characterized in that** the housing (2) is formed to protect against dust and/or is designed to be weather-resistant.

4. Digital surveillance camera (1) according to one of the preceding claims, **characterized in that** the housing (2) is designed to absorb thermal radiation.

5. Digital surveillance camera (1) according to one of the preceding claims, **characterized in that** the vapour-permeable diaphragm is semi-permeable to vapour and/or is arranged such that vapour can escape from the housing interior to the outside.

6. Digital surveillance camera (1) according to one of the preceding claims, **characterized in that** the vapour-permeable diaphragm (4) is at least temporarily repellent at least to water which is produced on the outside.

7. Digital surveillance camera (1) according to one of the preceding claims, **characterized in that** the vapour-permeable diaphragm (4) is formed with a textile-like woven fabric.

## Revendications

1. Caméra numérique de surveillance (1) destinée à être utilisée à l'extérieur,
présentant une source de chaleur et un boîtier (2) qui présente un capot transparent (3a) de protection de l'objectif et une membrane (4) perméable à la vapeur ainsi qu'un parcours de communication de gaz entre le capot de protection de l'objectif et la membrane perméable à la vapeur,
le boîtier (2) étant constitué d'une coquille inférieure et d'une coquille supérieure,
la membrane (4) perméable à la vapeur étant disposée sur la coquille inférieure du boîtier et le capot transparent de protection de l'objectif se prolongeant de manière étanche aux gaz en la coquille supérieure du boîtier de manière à former ainsi un espace fermé,
des trous (5a1, 5a2) servant d'ouvertures de communication pour les gaz étant prévus entre le capot de protection de l'objectif et l'intérieur du boîtier et
une carte de circuit étant prévue à l'intérieur du boîtier, la carte de circuit présentant des consommateurs électriques, notamment un processeur et/ou des interfaces de raccordement à un réseau qui servent de source de chaleur à l'intérieur du boîtier ainsi que plusieurs trous de passage (5b) qui permettent eux-mêmes le passage du gaz des trous (5a1, 5a2) à la membrane (4) de telle sorte que le parcours de gaz entre l'intérieur du boîtier et le capot de protection de l'objectif conduise vers la membrane (4) perméable aux gaz par les trous (5a1, 5a2) et les trous de passage (5b), de telle sorte que le parcours de communication pour les gaz soit formé par des alésages et/ou des trous de passage entre des parties du boîtier qui ne permettent sinon qu'un échange de gaz réduit.

2. Caméra numérique de surveillance (1) selon de revendication précédente, **caractérisée en ce que** le boîtier (2) est en matière synthétique moulée par injection, en particulier une matière synthétique qui permet un passage de vapeur d'eau de l'extérieur vers l'intérieur.

3. Caméra numérique de surveillance (1) selon l'une des revendications précédentes, **caractérisée en ce que** le boîtier (2) est formé de manière à assurer une protection contre la poussière et/ou résiste aux intempéries.

4. Caméra numérique de surveillance (1) selon l'une des revendications précédentes, **caractérisée en ce que** le boîtier (2) est conçu pour absorber le rayonnement thermique.

5. Caméra numérique de surveillance (1) selon l'une des revendications précédentes, **caractérisée en ce que** la membrane perméable à la vapeur d'eau est semi-perméable à la vapeur d'eau et/ou disposée de telle sorte que la vapeur d'eau puisse s'échapper de l'intérieur du boîtier vers l'extérieur.

6. Caméra numérique de surveillance (1) selon l'une des revendications précédentes, **caractérisée en ce que** la membrane (4) perméable à la vapeur d'eau est répulsive au moins brièvement au moins pour de l'eau venant de l'extérieur.

7. Caméra numérique de surveillance (1) selon l'une des revendications précédentes, **caractérisée en ce que** la membrane (4) perméable à la vapeur d'eau est configurée avec un tissu de type textile.
